Europäisches Patentamt

(19) European Patent Office

Office européen des brevets

(11) Veröffentlichungsnummer: **0 074 560**

A2

# (12) EUROPÄISCHE PATENTANMELDUNG

(21) Anmeldenummer: 82108024.9

(22) Anmeldetag: 01.09.82

(51) Int. Cl.³: **B 32 B 31/00**
B 60 R 13/00, B 32 B 5/00
B 32 B 27/00

(30) Priorität: 12.09.81 DE 3136257

(43) Veröffentlichungstag der Anmeldung:
23.03.83 Patentblatt 83/12

(84) Benannte Vertragsstaaten:
DE FR GB IT SE

(71) Anmelder: BASF Aktiengesellschaft
Carl-Bosch-Strasse 38
D-6700 Ludwigshafen(DE)

(72) Erfinder: Seiler, Erhard, Dr.
Erpolzheimer Strasse 1
D-6700 Ludwigshafen(DE)

(72) Erfinder: Jauch, Rolf, Dr.
Weinbergstrasse 19
D-6940 Weinheim(DE)

(72) Erfinder: Ricker, Ernst, Dr.
Rheinstrasse 4
D-7601 Willstaett(DE)

(72) Erfinder: Welz, Martin
Kaiserslauterer Strasse 231
D-6702 Bad Duerkheim(DE)

(54) Verfahren zur Herstellung von Verbundwerkstoffen.

(57) Die Erfindung betrifft ein Verfahren zur Herstellung von Verbundwerkstoffen aus einer tragenden Schicht A aus einem gefüllten Polyolefin und einer Dekor-Schicht B aus weichgemachtem, gegebenenfalls geschäumtem Polyvinylchlorid. Man bringt auf eine der Schichten Holzspäne einer mittleren Teilchengröße von 200 bis 3000 μm in einer Menge von 50 bis 250 g/m² und gegebenenfalls eine dünne Klebstoffschicht auf, führt die Schichten zusammen und verpreßt sie bei Temperaturen oberhalb des Schmelzpunktes des Polyolefins, vorzugsweise unter gleichzeitiger Formgebung. Die Verbundwerkstoffe sind z.B. durch Tiefziehen verformbar und eignen sich zur Herstellung von Verkleidungsteilen, insbesondere im Automobilbau.

EP 0 074 560 A2

Verfahren zur Herstellung von Verbundwerkstoffen

Die Erfindung betrifft ein Verfahren zur Herstellung von Verbundwerkstoffen aus einer tragenden Schicht A aus einem mit Füllstoffen versehenen Polyolefin und einer Dekor-Schicht B aus Weichmacher enthaltenden, gegebenenfalls geschäumten Polyvinylchlorid.

Polyolefine und Polyvinylchlorid haften normalerweise schlecht aneinander, so daß zum Verbinden der Schichten Haftvermittler angewandt werden müssen. Man hat dazu bisher drei verschiedene Wege eingeschlagen: man hat als Haftvermittler Schmelzkleber eingesetzt, man hat die Verbindung über Faservliese hergestellt und man hat die gefüllte Polyolefin-Schicht mechanisch aufgerauht und dann mit der Dekorschicht verklebt. Alle drei Methoden sind verhältnismäßig umständlich und teuer, der Verbund ist oft nicht fest genug und die mechanischen und thermischen Eigenschaften des Verbundwerkstoffs werden durch eine zusätzliche Haftvermittlerschicht ungünstig beeinflußt.

Die Erfindung lag daher die Aufgabe zugrunde, ein einfaches und preisgünstiges Verfahren zum Verbinden der Schichten A und B zu entwickeln, um Verbundwerkstoffe herzustellen, die wärmebeständig, gut dehn- und biegbar und weichmacherfest sind.

Diese Aufgabe wird dadurch gelöst, daß man auf eine der beiden Schichten Holzspäne einer mittleren Teilchengröße (gemessen durch Siebanalyse) von 100 bis 3000 um in einer Menge von 50 bis 250 $g/m^2$ aufbringt, die beiden Schichten zusammenführt und bei Temperaturen oberhalb des Schmelzpunktes des Polyolefins miteinander verpreßt.

Dd/P

Die tragende Schicht A besteht aus einem gefüllten Polyolefin und kann 0,5 bis 8, vorzugsweise 1 bis 4 mm dick sein. Unter Polyolefinen werden dabei die Homo- und Copolymerisate des Ethylens und des Propylens mit copolymerisierbaren olefinisch ungesättigten Verbindungen verstanden. Geeignete Polyolefine sind Polyethylen der Dichte 0,890 bis 0,965 $g/cm^3$ (nach DIN 53 479) und des Schmelzindex von 0,1 bis 20 g/10 min (nach ASTM D 1238-65 T bei einer Temperatur von 190°C und einem Auflagegewicht von 2,16 kg) sowie Polypropylen der Dichte 0,30 bis 0,90 $g/cm^3$ und des Schmelzindex von 0,1 bis 20 g/10 min (nach ASTM-D 1238-65 T bei 230°C und 2,16 kg Belastung). Unter Schmelzpunkt der Polyolefine sind die Kristallitschmelzpunkte zu verstehen.

Die Polyolefine können zur Erhöhung ihrer Schlagzähigkeitseigenschaften gegebenenfalls noch 1 bis 20 Gewichtsprozent an üblich bekannten synthetischen Kautschuken oder Blockcopolymerisaten aus Styrol und Dienen enthalten. Als besonders geeignetes Polyolefin wird isotaktisches Polypropylen verwendet. Dieses enthält 3 bis 10 Gewichtsprozent eines Polypropylens, das in siedenden und anschließend auf Zimmertemperatur wieder abgekühlten Xylol, bei einem Gewichtsverhältnis von Polypropylen zu Xylol wie 5:95, löslich ist.

Die Polyolefine sind mit 10 bis 60, bevorzugt 20 bis 50 Gewichtsprozent, bezogen auf das Gewicht des gefüllten Polyolefins, eines üblichen festen und inerten Füllstoffes gefüllt. Für die Verwendung der Polyolefinschicht geeignete Füllstoffe sind beispielsweise Glasfasern, Glasmatten, Glaskugeln, Talkum, Kreide, Glimmer sowie vorzugsweise feinteiliges Holz. Als Holzteilchen kommen alle marktgängigen Typen in einer mittleren Teilchengröße von 30 bis 3000 µm, vorzugsweise von 50 bis 500 µm in Betracht. Die Holzmehle können sowohl in Pulverform als auch kompaktiert eingesetzt sein. Zusätzlich zu den obigen Füllstoffen können die Polyolefinmassen noch einschlägig bekannte Flammschutzmittel, Mittel zur Verbesserung der Schlagfestigkeit wie
Polyethylen niederer Dichte, Stabilisatoren oder Polymerisat-Abfallstoffe enthalten.

Die Dekorschicht besteht aus Weichmacher enthaltendem Polyvinylchlorid, das gegebenenfalls durch Zusatz von Styrolcopolymeren, wie Styrol-Acrylnitril-Copolymerisat, Acrylnitril-Butadien-Styrol-Copolymerisat, Acrylnitril-Styrol-Acrylester-Copolymerisat oder Pfropfkautschuken zur Schlagzähmodifizierung oder durch Zusatz von gesättigten Polyestern
zur Verbesserung der Verarbeitbarkeit modifiziert sein kann.
Vorzugsweise wird eine weichgemachte PVC-Folie verwendet,
die geschäumt sein kann, um einen weicheren Griff und Polstereffekt zu erzeugen. Solche Folien sind in vielen Farben
und Mustern auf dem Markt erhältlich. Die Dicke der
Schicht B kann bei kompaktem Aufbau zwischen 0,1 und 3 mm,
bei geschäumten Folien zwischen 0,5 und 5 mm liegen.

Unter Polyvinylchlorid wird das Polymerisationsprodukt des
Vinylchlorids verstanden, das einen Chlorgehalt von 56 bis
57 Gewichtsprozent und einen Erweichungspunkt von 75 bis
80 $^{o}$C aufweist. Der K-Wert liegt vorzugsweise bei 70 bis 90
(gemessen nach DIN 53 726). Ein geschäumtes Polyvinylchlorid
ist ein künstlich hergestellter leichter Schaumstoff mit
zelliger Struktur. Für die erfindungsgemäßen Verbundstoffe
sind PVC-Weichschäume mit Dichten von 0,6 bis 1,3 g/cm$^{3}$
besonders geeignet. Die Dekorschicht enthält übliche Weichmacher in Mengen von 15 bis 40, bevorzugt 20 bis 35 Gewichtsprozent, bezogen auf das Weich-PVC. Geeignete Weichmacher
sind beispielsweise Trikresylphosphat, Phthalsäureester oder
Ester aliphatischer Dicarbonsäuren. Das Weich-PVC kann
außerdem noch übliche Stabilisatoren und Pigmente enthalten.

0074560

Bei dem erfindungsgemäßen Verfahren wird die Verbindung zwischen den Schichten durch Holzspäne hergestellt, die in beiden Schichten mechanisch verankert werden. Die Holzspäne haben eine mittlere Teilchengröße (gemessen durch Siebanalyse) von 100 bis 3000 $\mu$m; sie werden in einer Menge von 50 bis 250 g auf 1 m$^2$ einer Schicht aufgebracht. Arbeitet man außerhalb dieser Grenzen, d.h., verwendet man zu wenig oder zu viel Holzspäne, so erhält man keinen ausreichenden Verbund. Bevorzugt verwendet man Hartholzspäne mit einer mittleren Teilchengröße von 200 bis 1000 $\mu$m und einem Länge:Dicke-Verhältnis von 1:1 bis 20:1. In manchen Fällen kann es zweckmäßig sein, die Verankerung der Holzspäne in den Schichten mit Hilfe eines Klebstoffs aus einer Kunststoff-Lösung oder -Dispersion zu verbessern. Dafür eignen sich z.B. Lösungen von ggf. weichmacherhaltigem Polyvinylchlorid in Tetrahydrofuran oder Lösungen von Copolyestern in Toluol, bevorzugt sind wäßrige Dispersionen, z.B. von Polyvinylchlorid, Polyvinylidenchlorid, Polyacrylaten, Styrol/Butadien-Polymerisaten oder Butadien/Acrylnitril-Polymerisaten. Das Lösungsmittel bzw. Wasser muß natürlich vor dem Zusammenführen der Schichten verdampft werden, zweckmäßigerweise indem man die mit Dispersion oder Lösung bestrichene Schicht durch einen Heißluftofen oder unter einem IR-Strahlerfeld hindurchführt.

Für das Aufbringen der Holzspäne auf die Schichten A bzw. B gibt es verschiedene bevorzugte Ausführungsformen:

Bei einer ersten Ausführungsform werden auf die Polyvinylchlorid-Schicht B Holzspäne aufgestreut, die durch einen Klebstoff fixiert werden. Hierzu wird man üblicherweise zuerst die Klebstoffschicht mit einer Dicke von vorzugsweise 100 bis 500 $\mu$m aufstreichen und dann die Holzspäne aufstreuen. Das Lösungsmittel bzw. Wasser wird anschließend verdampft.

0074560

O.Z. 0050/035418

Bei einer zweiten Ausführungsform werden die Holzspäne in die Schicht B während ihrer Herstellung eingebracht. Ein bevorzugtes Verfahren zur Herstellung dieser Schicht besteht darin, daß man eine oder mehrere Plastisol-Schichten aus weichmacherhaltiger Polyvinylchlorid-Paste übereinander aufstreicht und durch Erhitzen gelieren läßt. Vor oder während des Gelierens der obersten Schichtseite, die mit der Schicht A zusammengeführt werden soll, werden nun auf diese die Holzspäne aufgestreut; beim Gelieren werden sie in der Schicht fixiert. Man kann auch hier noch zusätzlich einen Klebstoff aufbringen.

Bei einer dritten Ausführungsform wird die Seite der Schicht B, die mit der Schicht A zusammengeführt werden soll, auf 80° bis 150°C erwärmt, die Holzspäne werden aufgestreut und durch Walzen in die weiche Oberfläche eingedrückt und dadurch dort fixiert.

Bei einer vierten Ausführungsform streut man die Holzspäne auf die auf Temperaturen oberhalb des Schmelzpunktes des Polyolefins erwärmte Schicht A auf. Im Fall der Verwendung von holzmehlgefülltem Polypropylen liegt der bevorzugte Temperaturbereich zwischen 160 und 230°C, bei gefülltem Polyethylen zwischen 140 und 200°C. Zweckmäßigerweise streut man die Holzspäne auf die Schicht A kurz nach ihrer Herstellung durch Breitschlitzextrusion des gefüllten Polyolefins auf, solange dieses noch im plastischen Zustand ist. Die Holzspäne werden dann durch Walzen in die Schicht A eingepreßt. Vorzugsweise wird zusätzlich noch eine Klebstoffschicht, wie oben beschrieben, aufgebracht.

Bei einer fünften Ausführungsform werden die Holzspäne auf die Schicht A bei Raumtemperatur aufgestreut, die Schicht wird dann auf Temperaturen oberhalb des Erweichungspunktes des Polyolefins erhitzt, z.B. mittels eines IR-Strahler-

0074560

feldes.

Die Schicht A wird dann mit einer ebenfalls auf Temperaturen oberhalb des Schmelzpunktes des Polyvinylchlorids, vorzugsweise auf 120° bis 150°C erwärmten Schicht B zusammengeführt. Diese Arbeitsweise ist nur bei Verwendung von ungeschäumtem Polyvinylchlorid für die Schicht B anwendbar, da bei einer Schaumfolie beim Erwärmen die Schaumstruktur leiden und die Oberfläche geschädigt werden würde.

Zum Verbinden der Schichten wird die Schicht A auf Temperaturen oberhalb des Schmelzpunktes des Polyolefins, im Falle von Polypropylen auf 160° bis 230°C aufgeheizt, dann wird die Schicht B mit der Schicht A zusammengeführt und beide werden miteinander verpreßt, vorzugsweise bei Drücken von 5 bis 100 bar. Zusammenführen und Verpressen werden entweder kontinuierlich ausgeführt, z.B. in beheizten Walzen oder Bandpressen, oder bei gleichzeitiger Formgebung taktweise in hydraulich oder mechanisch betätigten Formpressen.

Das kontinuierlich hergestellte Halbzeug aus den Schichten A und B kann nach verschiedenen Verfahren wie Vakuum- oder Druckluftformen, Abkanten, Biegen, Pressen nach entsprechendem Aufheizen zu Formkörpern verarbeitet werden. Bei der kontinuierlichen Verfahrensweise wird der fertige Verbund erst beim Verformen unter Druck mittels Pressen aus Trägerschicht A und Dekorschicht B hergestellt. Dieses Verfahren hat vor allem den Vorteil, daß die Schichten A und B auf verschiedene Temperaturen aufgeheizt werden können.

Die in den Beispielen genannten Teile und Prozente beziehen sich auf das Gewicht.

0074560

## Beispiel 1

Auf eine nicht geschäumte Weich-PVC-Folie (65 % PVC mit K-Wert 68 nach Fikentscher und 35 % Weichmacher Dioctylphthalat) von 0,5 mm Dicke und Abmessungen von 200 x 200 mm wird mit Hilfe eines Rakels eine 400 µm dicke Schicht einer 20 %igen Lösung von 60 Teilen PVC und 40 Teilen Dioctylphthalat in Tetrahydrofuran (THF) aufgebracht. Über ein Sieb mit Maschenweite 3000 µm werden ca. 5 g (entsprechend 125 g/m$^2$) Buchenholzspäne mit einer mittleren Teilchengröße (nach Siebanalyse) von ca. 400 µm und einem mittleren Länge:Dicke-Verhältnis l/d ∼5 gleichmäßig auf die PVC-Folie (= Schicht B) aufgestreut und mit einer Rolle leicht in die Kleberschicht eingedrückt. Das Lösungsmittel THF wird durch 15 minütiges Lagern der Schicht B im Trockenschrank bei 80°C verdampft.

Die so ausgerüstete Schicht B wird auf eine mittels IR-Strahlern auf 200° aufgeheizte Platte mit den Abmessungen 200 x 200 x 2,8 mm aus Holzmehl gefülltem Polypropylen (Schicht A bestehend aus 38 % Holzmehl mit einer mittleren Teilchengröße (nach Siebanalyse) von ca 80 µm, 62 % iso taktisches Polypropylen mit Dichte 0,89 g/cm$^3$ und Meltindex 13 g/10 min nach ASTM 1233-65 T bei 230°C und 2,16 kg Belastung) aufgelegt und schnell in eine kalte zweiteilige Plattenform mit den Innenraumabmessungen im geschlossenen Zustand von 210 x 210 x 3,1 mm eingebracht.

Die Plattenform ist in eine hydraulisch betriebene Presse mit einer maximalen Presskraft von 250 t eingebaut, die nach Einbringen der heißen Schicht A mit aufgelegter Schicht B schnell geschlossen wird. Die Schließzeit bis zum Druckaufbau von 50 bar beträgt 4 sec. Danach wird der Druck weitere 80 sec aufrechterhalten. Während dieser Zeit kühlt der Verbundwerkstoff aus den Schichten A und B bis auf ca 50 bis

0074560

60°C ab und kann nach Öffnen der Presse entnommen werden.

Aus der fertigen Verbundplatte werden Streifen mit einer Breite von 25 mm ausgesägt. An diesen Streifen wird der Rollenschältest in Anlehnung an DIN 53289 bei Raumtemperatur und bei 90°C durchgeführt. Dieser Test stellt ein bewährtes Maß für die Haftfestigkeit des Verbundes dar.

An den erfindungsgemäß hergestellten verbunden werden folgende Schälfestigkeiten gemessen:

a)   bei Raumtemperatur
     Mittelwert aus 3 Messungen über die gesamte Meßstrecke: 0,79 N/mm Anriß:   0,84 N/mm

b)   bei 90°C Mittelwert (ebenfalls 3 Messungen):
     0,48 N/mm Anriß:   0,39 N/mm

Die ursprünglich nur auf die Schicht B aufgebrachten Holzspäne finden sich nach Trennung des Verbundes auf den Kontaktflächen beider Schichten wieder.

Beispiel 2

Es wurde wie in Beispiel 1 verfahren mit dem Unterschied, daß statt einer THF-Lösung eine 50 %ige wäßrige PVC-Dispersion (Lutofan 300D der BASF) verwendet wird. Von dieser Dispersion wird eine 200 um dicke Schicht auf die PVC-Folie gerakelt. Wie in Beispiel 1 werden etwa 5 g Holzspäne aufgebracht. Die Schicht wird 30 Minuten bei 90°C im Trockenschrank getrocknet.

Die Verarbeitung erfolgte ebenfalls nach der in Beispiel 1 beschriebenen Verfahrensweise

Ergebnis des Rollenschältests:

a) bei Raumtemperatur

| | |
|---|---|
| Mittelwert: | 0,68 N/mm |
| Anriß: | 0,70 N/mm |

b) bei 90°C

| | |
|---|---|
| Mittelwert: | 0,27 N/mm |
| Anriß: | 0,35 N/mm |

Beispiel 3

Von einer Rolle einer nach dem Kalanderverfahren hergestellten ungeschäumten ABS-haltigen Weich-PVC-Folie von 800 μm Dicke wird eine Bahn kontinuierlich unter einem IR-Strahlerfeld so hindurchgeführt, daß die mittlere Verweilzeit in der Heizstrecke ca. 15 sec beträgt, und die den Strahlern zugewandte Oberfläche der PVC-Folie auf eine Temperatur von 120 bis 150°C gebracht wird, während die Rückseite möglichst kalt gehalten wird. Unmittelbar hinter dem IR-Strahlerfeld werden über eine übliche Streuvorrichtung für körnige bis pulvrige Güter (bestehend aus Vorratsbehaälter mit einer am Auslauf eingebauten rauhen Mitnehmerwalze und einer parallel dazu laufenden Bürstenwalze) kontinuierlich ca. 200 g/m² Holzspäne (Typ wie in Beispiel 1) auf die heiße Oberfläche der PVC-Schicht gestreut, und durc ein unmittelbar nachgeschaltetes Walzenpaar in die oberflächlich weiche, klebrige PVC-Schicht eingedrückt und dort zumindest teilweise fixiert. Nach einer Abkühlstrecke wird der nicht festgebundene Anteil der Holzspäne mit einer weichen Bürstenwalze abgestreift und kann wieder in die Streuvorrichtung zurückgeführt werden. Auf der PVC-Folie ver-

**0074560**

bleiben 85 g/m$^2$ fest haftende Holzspäne. Die anschließende
Verarbeitung zum Verbundwerkstoff mit Schicht A erfolgt wie
in Beispiel 1 beschrieben.

Ergebnis des Rollenschältests:

a)    bei Raumtemperatur

       Mittelwert:          0,95 N/mm

       Anriß:            1,02 N/mm

b)    bei 90$^{\circ}$

       Mittelwert:          0,60 N/mm

       Anriß:            0,52 N/mm

## Beispiel 4

Analog wie in Beispiel 2 beschrieben, wird eine mit Holzspänen rückseitig modifizierte Weich-PVC-Folie (Schicht B)
hergestellt, mit dem Unterschied, daß als wäßrige Dispersion
eine selbstvernetzende Acrylatdispersion (Acronal 34D der
BASF) in gleicher Konzentration und Menge eingesetzt wird.

Als Schicht A wird ein mit 40 % feinteiliger, mit Stearinsäure beschichteter Kreide gefülltes Polypropylen (hochisofaktisch, Dichte 0,89, Meltindex 2,5 g/10 min nach
ASTM 1238-65 T bei 230$^{\circ}$C und 2,16 kg Belastung) verwendet.

Die 2,8 mm starke Schicht A wird auf 200$^{\circ}$C aufgeheizt und
wie in Beispiel 1 beschrieben mit der Schicht B heiß verpreßt und unter Druck in der Presse abgekühlt.

0074560

Ergebnis des Rollenschältests:

a)      Raumtemperatur

Mittelwert:         1,08 N/mm
Anriß:              0,9  N/mm

b)      bei 90°C

Mittelwert:         0,65 N/mm
Anriß:              0,60 N/mm

**Beispiel 5**

In einem Einwellenextruder wird eine innige Mischung aus
60 % isotaktischem Polypropylen (Meltindex 1,5 g/10 min)
und 40 % feinteiligem Holz (Weichholzmehl mit mittlerer
Teilchengröße nach Siebanalyse von 150 µm) aufgeschmolzen
und kontinuierlich über eine Breitschlitzdüse bei einer
Massetemperatur von 220°C ausgetragen. Auf das aus der
Breitschlitzdüse austretende rauhe Schmelzeband werden über
eine Streuvorrichtung, wie in Beispiel 3 beschrieben, kontinuierlich ca 150 g/m$^2$ Hartholzspäne (mittlere Teilchengröße nach Siebanalyse von ~600 µm) aufgebracht. Die noch
weiche Schicht mit den locker aufliegenden Holzspänen wird
unmittelbar anschließend in eine Kalibrier- und Preßwalzeneinrichtung eingeführt und dort mit einem Linienpreßdruck
von 25 N/mm verdichtet, wobei die aufgestreuten Holzspäne
zumindest teilweise fest mit dem gefüllten Polyolefin verbunden werden.

Die noch heiße Schicht A wird nach Abkühlen auf 80 bis 120°C
Massetemperatur mit einer 50 %igen wäßrigen PVC-Dispersion
(Lutofan 300 D der BASF) in einer Menge von ca. 150 bis
200 g Dispersion/m$^2$ besprüht. Auf der verbleibenden Abkühl-

0074560

strecke wird das anhaftende Wasser nahezu restlos entfernt.
Die Platten werden dann geschnitten und können ohne Gefahr
des Verklebens aufeinander gestapelt werden.

Die in der beschriebenen Weise mit Holzspänen versehene
Schicht A wird in einem IR-Strukturfeld auf eine Massetemperatur von 190°C gebracht, mit einer kalten, 1,8 mm
dicken Weich-PVC-Schaumfolie der Diichte 0,95 g/cm$^3$ belegt
und wie in Beispiel 1 beschrieben in eine zweiteilige
Plattenform mit den Abmessungen 210 x 210 x 4,4 mm eingebracht und mit einem Druck von 15 bar verpreßt und abgekühlt. Die reine Preßzeit beträgt 45 sec. Der geöffneten
Presse wird ein nahezu kaltes Preßstück entnommen.

Rollenschältest

a)    bei Reumtemperatur

      Mittelwert:          1,05  N/mm
      Anriß:               1,2   N/mm

b)    90°C

      Mittelwert:          0,42
      Anriß:               0,60

Beispiel 6

In einer Versuchsreihe wird der Einfluß der Menge an aufgebrachten Holzspänen auf die Schälfestigkeit des Verbundwerkstoffs aus Schicht A und B ermittelt.

Die Verfahrensweise erfolgt wie in Beispiel 5 beschrieben.

0074560

Die Ergebnisse (s. Tab.) zeigen, daß sowohl bei weniger als der angegebenen Mindestmenge an Holzspänen als auch bei mehr als der angegebenen Maximalmenge deutlich schlechtere Schälfestigkeiten des Verbundwerkstoffs erhalten werden.

| Versuch | a | b | c | d | e | f |
|---|---|---|---|---|---|---|
| $g/m^2$ Holzspäne | 22 | 40 | 80 | 130 | 220 | 300 |
| Schälfestigkeit (N/mm) bei RT | 0,08 | 0,24 | 0,57 | 0,78 | 0,55 | 0,25 |

Die Versuche a, b und f sind nicht erfindungsgemäß.

Beispiel 7

Eine Platte mit den Abmessungen 200 x 200 x 2,8 mm aus Holzmehl/Polypropylen (= Schicht A, bestehend aus 36 % Holzmehl mit einer mittleren Teilchengröße nach Siebanalyse von ca. 80 µm, 50 % isotaktischem Polypropylen mit Meltindex 13 g/10 min, 10 % eines Ethylen/Propylenkautschuks (Dutral 038 der Montedison), 2 % feinteiliges Magnesiumoxid und 2 % eines 45 %igen Ruß/Polyethylen-Konzentrats) wird in kaltem Zusatnd mit 120 $g/m^2$ feinen Hartholzspänen (mittlere Teilchengröße nach Siebanalyse ~600 µm, mittleres Länge-Dicke-Verhältnis l/d 6) bestreut und mittels IR-Strahlern innerhalb von 3 Minuten auf eine Massetemperatur von 190°C aufgeheizt.

Gleichzeitig wird eine 0,5 mm starke, ungeschäumte Weich--PVC-Folie (Schicht B) auf der späteren Kontaktfläche zu Schicht A einseitig auf 120 bis 150°C aufgeheizt (Dauer ~30 sec). Schicht B wird auf Schicht A gelegt und schnell in der in Beispiel 1 beschriebenen Weise mit einem Druck von 30 bar heiß verpreßt und unter Druck in der Form abge-

kühlt.

Rollenschältest:

a)    bei Raumtemperatur

Mittelwert:                 1,5 N/mm
Anriß:                      1,8 N/mm

b)    bei 90°C reißt die PVC-Folie, bevor ein Abschälen der Schicht erfolgt.

## Beispiel 8

Analog wie in Beispiel 5 beschrieben, werden auf das extrudierte Schmelzeband aus Holzmehl/Polypropylen 120 g/m$^2$ Holzspäne aufgestreut. Vor der Verdichtung durch die Kalibrier- und Preßwalzeneinrichtung wird eine 1,8 mm dicke Weich-PVC-Schaumfolie, die auf der Schicht A zugewandten Seite mittels IR-Strahlern auf eine Oberflächentemperatur von 80 bis 120°C gebracht wurde, kontinuierlich zugeführt und unmittelbar anschließend in der Kalibrier- und Preßwalzeneinrichtung mit einem Flächendruck von 2 bis 3 bar verdichtet. In der nachfolgenden Kühlstrecke wird der Verbund auf 40° bis 60°C abgekühlt, geschnitten und gestapelt.

Die Schälfestigkeit des Verbundes beträgt bei Raumtemperatur 1,1 N/mm

Aus diesen Verbundplatten wird ein Zuschnitt von 200 x 200 mm ausgesägt. Er wird einseitig von der Seite der Schicht A mittels IR-Strahlern auf ca. 170°C aufgeheizt und wie in Beispiel 1 beschrieben mit einem Druck von 15 bar verpreßt.

0074560

Rollenschältest:

a) bei Reumtemperatur

Mittelwert:        1,3 N/mm
Anriß:             1,25 N/mm

b) bei 90°C

Mittelwert:        0,65 N/mm
Anriß:             0,85 N/mm

0074560

## Patentansprüche

1. Verfahren zur Herstellung von Verbundwerkstoffen durch Verbinden einer Schicht A aus einem mit 10 bis 60 Gew.-% Füllstoffen gefüllten Polyolefin und einer Schicht B aus einem 15 bis 40 Gew.-% Weichmacher enthaltenden, gegebenenfalls geschäumten Polyvinylchlorid, wobei die Schichten zusammengeführt und miteinander bei Temperaturen oberhalb des Schmelzpunktes des Polyolefins verpreßt werden, dadurch gekennzeichnet, daß man auf eine der beiden Schichten Holzspäne mit einer mittleren Teilchengröße von 100 bis 2000 um in einer Menge von 50 bis 250 g/m$^2$ aufbringt.

2. Verfahren zur Herstellung von Verbundwerkstoffen nach Anspruch 1, dadurch gekennzeichnet, daß man auf die Schicht B eine Klebstoffschicht aus einer Kunststoff-Lösung oder -Dispersion aufbringt und Holzspäne aufstreut, und vor dem Zusammenführen der Schichten das Lösungs- bzw. Dispersionsmittel verdampft.

3. Verfahren zur Herstellung von Verbundwerkstoffen nach Anspruch 1, dadurch gekennzeichnet, daß man bei der Herstellung der Schicht B durch Aufstreichen und Gelieren einer oder mehrerer PVC-Plastisol-Schichten übereinander, auf die Seite der Schicht B, die mit der Schicht A zusammengeführt werden soll, vor oder während des Gelierens der letzten Schicht auf diese Holzspäne aufstreut und dann gelieren läßt.

4. Verfahren zur Herstellung von Verbundwerkstoffen nach Anspruch 1, dadurch gekennzeichnet, daß man die Seite der

0074560

Schicht B, die mit der Schicht A zusammengeführt werden soll, auf 80° bis 150°C erwärmt, Holzspäne aufstreut und durch Walzen an der Oberfläche der Schicht B fixiert.

5. Verfahren zur Herstellung von Verbundwerkstoffen nach Anspruch 1, dadurch gekennzeichnet, daß man auf die auf Temperaturen oberhalb des Schmelzpunktes des Polyolefins erwärmte Schicht A Holzspäne aufstreut, durch Walzen an der Oberfläche fixiert, darauf eine Klebstoffschicht aus einer Kunststoff-Lösung oder -Dispersion aufbringt und vor dem Zusammenführen der Schichten das Lösungsmittel verdampft.

6. Verfahren zur Herstellung von Verbundwerkstoffen nach Anspruch 1, dadurch gekennzeichnet, daß man auf die Schicht A bei Raumtemperatur Holzspäne aufstreut, die Schicht dann auf Temperaturen oberhalb des Schmelzpunktes des Polyolefins aufheizt und mit einer 120° bis 150°C heißen ungeschäumten Polyvinylchlorid-Schicht B zusammenführt.

7. Verfahren zur Herstellung von Verbundwerkstoffen nach Anspruch 1, dadurch gekennzeichnet, daß die Schicht A aus Polypropylen besteht, welches mit Holzmehl einer mittleren Teilchengröße von 50 bis 500 µm gefüllt ist.

8. Verfahren zur Herstellung von Verbundwerkstoffen nach Anspruch 1, dadurch gekennzeichnet, daß zum Verbinden der Schichten Hartholzspäne mit einer mittleren Teilchengröße von 200 bis 1000 µm und einem Läng : Dicke-Verhältnis von 1:1 bis 20:1 verwendet werden.